# EUROPEAN PATENT APPLICATION

(11) **EP 1 365 614 A1**
(43) Date of publication of application: **26.11.2003**
(21) Application number: 02253618.9
(22) Date of filing: 22.05.2002
(51) Int. Cl.: H04Q 7/38

(54) **A method of selecting which base station of those in dedicated channel connection with a mobile user terminal is to be in shared channel connection with the mobile user terminal, and a corresponding network for mobile telecommunications**

(71) Applicant: LUCENT TECHNOLOGIES INC., Murray Hill, New Jersey 07974-0636 (US)
(72) Inventor: Iqbal, Jami, Swindon, Wiltshire SN1 2SF (GB); Mazlyn, M. Mustapha, Swindon, Wiltshire SN25 1WB (GB)
(74) Representative: Sarup, David Alexander

(57) **Abstract**

A method is provided of selecting which base station of those in dedicated channel connection with a mobile user terminal is to be in shared channel connection with the mobile user terminal. Measurements of signal attenuation between the mobile user terminal and each base station being made, the base station being selected dependent upon the measured signal attenuations.

## Description

### Technical Field

The present invention relates to a method of selecting which base station of those in dedicated channel connection with a mobile user terminal is to be in shared channel connection with the mobile user terminal. The present invention also relates to a network for mobile telecommunications comprising a plurality of base stations connected to a base station controller.

### Background of the Invention

Usually, in a mobile telecommunications network, a mobile user terminal (user equipment UE) may have connections with multiple base stations each connection being over a respective dedicated channel. This is in particular for reasons of diversity, i.e to alleviate problems of fading and so improve overall reception. To add or drop connections each over a respective dedicated channel, the mobile user terminal sends periodic measurements of signal attenuation (also known as path loss) from each of its surrounding base stations. These measurements will indicate which base station has the smallest signal attenuation. Then, it is the task of the base stations' controller, such as a radio network controller RNC to decide whether a new connections should be added for the mobile user terminal, and if so to which base stations the new connections should be made, or conversely whether existing connections should be removed for the mobile user terminal, and if so which existing connections to remove.

For mobile applications which are bursty in nature and not delay sensitive, a shared channel provides an efficient way to transfer data compared to a dedicated channel connection. This is particularly true for a downlink shared channel (DSCH), where downlink resources are shared between several users. These downlink resources include downlink transmit power (downlink cell loading), uplink cell loading (i.e. power to the base station), and available spreading codes. Accordingly it can be advantageous to transfer a call connection from dedicated channel(s) to a channel shared with other users.

When a call connection with a mobile user terminal is changed from a dedicated channel or channels to a shared channel, as the shared channel can only be from one base station any connections with other base stations must be released. The downlink shared channel will only be transmitted from one base station, known as the primary base station. The primary base station is the base station from which the mobile user terminal receives broadcast information. The primary base station may not be the best base station to transmit the downlink shared channel, as it may be more efficient to use other base stations which have a lower signal attenuation, for example. Accordingly the known approach may not utilise the downlink resources efficiently.

### Summary of the Invention

The present invention provides a method of selecting which base station of those in dedicated channel connection with a mobile user terminal is to be in shared channel connection with the mobile user terminal, measurements of signal attenuation between the mobile user terminal and each base station being made, the base station being selected dependent upon the measured signal attenuations.

Preferably if one of the base stations has the lowest measured signal attenuation by a predetermined margin, that base station is selected.

Preferably measurements of downlink signal to interference ratio between the mobile user terminal and each of the base stations are made, the base station being selected dependent upon the measured signal to interference ratios. Preferably if more than one base station has a measured signal attenuation which is acceptably low, if one of those base stations has the highest measured signal to interference ratio by a predetermined margin, that base station is selected.

A method according to any preceding claim, in which measurements of uplink and downlink power loading between the mobile user terminal and each of the base stations are made, the base station being selected dependent upon the combined uplink and downlink measured power loadings for each base station. Preferably if more than one base station has a measured signal attenuation which is acceptably low and a measured signal to interference ratio which is acceptably high, if one of those base stations is determined as having the lowest combined uplink and downlink power loading by a predetermined margin, that base station is selected.

Preferably measurements of traffic loading on the shared channel of each of the base stations are made, the base station being selected dependent upon the measured traffic loadings. Preferably if more than one base station has a measured signal attenuation which is acceptably low, a measured signal to interference ratio which is acceptably high, and a combined uplink and downlink power loading which is acceptably low, of those base stations the base station having the lowest measured traffic loading is selected.

Furthermore the base stations and mobiles are preferably Universal Mobile Telecommunications System UMTS base stations and mobiles.

The present invention also provides a network for mobile telecommunications comprising a plurality of base stations connected to a base station controller, the controller being operative to select which base station of those in dedicated channel connection with a mobile user terminal is to be in shared channel connection with the mobile user terminal, the mobile user terminal being operative to measure signal attenuation from each base station, the measured signal attenuations being reported to the controller, the controller being operative to select the base station dependent upon the measured signal attenuations.

Furthermore preferably the controller is operative to determine whether one of the base stations has the lowest measured signal attenuation by a predetermined margin, and if so, the controller is operative to select that base station.

Furthermore preferably the mobile user terminal is operative to make measurements of downlink signal to interference ratio from each base station, the controller being operative to select the base station dependent upon the measured signal to interference ratios. Furthermore preferably if more than one base station has a measured signal attenuation which is acceptably low, the controller is operative to determine whether one of the base stations has the highest measured signal to interference ratio by a predetermined margin, and if so, the controller is operative to select that base station.

Furthermore preferably, in use, measurements of uplink and downlink power loading between the mobile user terminal and each of the base stations are made, the controller being operative to select the base station dependent upon the combined measured uplink and downlink power loadings for each base station. Furthermore preferably if more than one base station has a measured signal attenuation which is acceptably low and a measured signal to interference ratio which is acceptably high, the controller is operative to determine whether one of the base stations has the lowest combined uplink and downlink power loading by a predetermined margin, and if so the controller is operative to select that base station.

Furthermore preferably, in use, measurements of traffic loading on the shared channel of each of base station are made, the controller being operative to select the base station dependent upon the measured traffic loadings. Furthermore preferably if more than one base station has a measured signal attenuation which is acceptably low, a measured signal to interference ratio which is acceptably high, and a combined uplink and downlink power loading which is acceptably low, the controller is operative to select the base station having the lowest measured traffic loading.

Furthermore the network is preferably a Universal Mobile Telecommunications System UMTS network. The controller is preferably a radio network controller RNC.

It will be seen that preferred embodiments of the invention utilise the radio resources as efficiently as possible and improves the overall performance of the system by selecting the serving base station that has the smallest signal attenuation or the best signal-to-interference ratio or the lowest combined uplink and downlink power loading, by a sulaicient respective margin, or the lowest shared-channel existing-traffic loading

It will be seen that preferred embodiments provide a strategy to choose which connection to a base station should be maintained according to the following criteria:
lowest signal attenuation (path loss) by a sufficient margin, else
acceptably low signal attenuation and highest downlink signal-to-interference ratio by a sufficient margin, else
acceptably low signal attenuation, acceptably high downlink signal-to-interference ratio, and lowest combined uplink and downlink loading by a sufficient margin, else
acceptably low signal attenuation, acceptably high downlink signal-to-interference ratio, acceptably low combined uplink and downlink loading, and lowest current traffic loading on the base station's shared channel

Some preferred embodiments use the parameters to enable a radio network controller RNC to decide which base station is suitable for the transmission on the downlink shared channel DSCH.

### Brief Description of the Drawings

A preferred embodiment of the present invention will now be described by way of example and with reference to the drawings, in which:
Figure 1 is a diagram illustrating a mobile user terminal in connection with more than one base station over dedicated channels,
Figure 2 is a diagram illustrating the mobile user terminal in connection with one of the base station via a downlink shared channel DSCH, and
Figure 3 is a diagram illustrating the preferred sequence in which various parameters are measured in selecting the base station to be in connection with the mobile user terminal upon transition from the connection configuration shown in Figure 1 to the connection configuration shown in Figure 2, and
Figure 4 is a flow diagram of the preferred implementation.

### Detailed Description

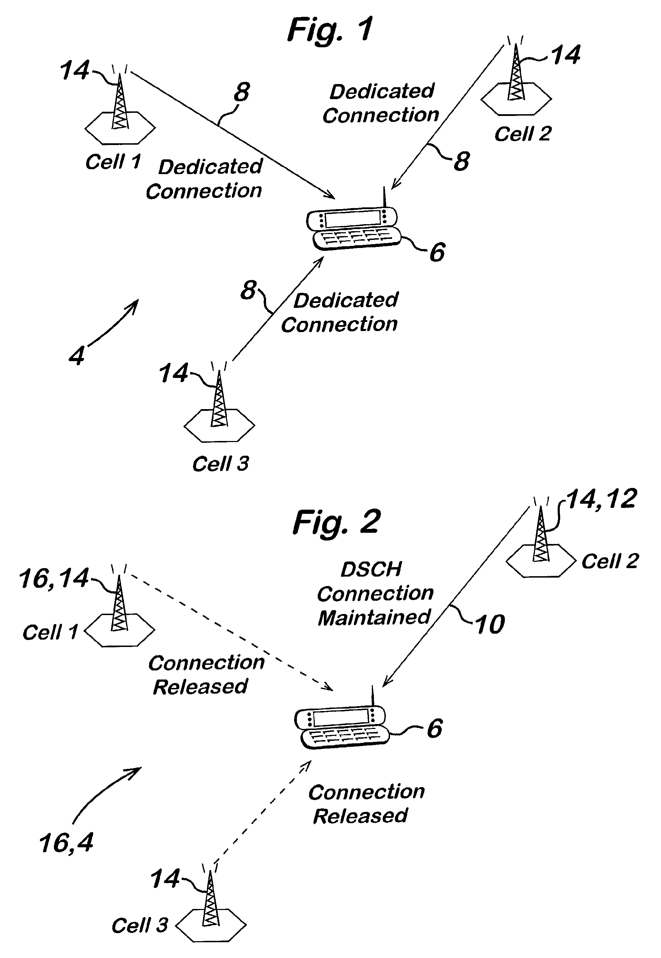

As shown in Figures 1 and 2, in a network 4 for mobile telecommunications by radio when call connection with a mobile user terminal 6 is changed from dedicated channels 8 to a shared channel 10, as the shared channel 10 can only be from one base station 12 of the base stations 14 any connections with other base stations 16 must be released. The base stations 12,14,16 are under the control of a controller (not shown) known as a radio network controller RNC.

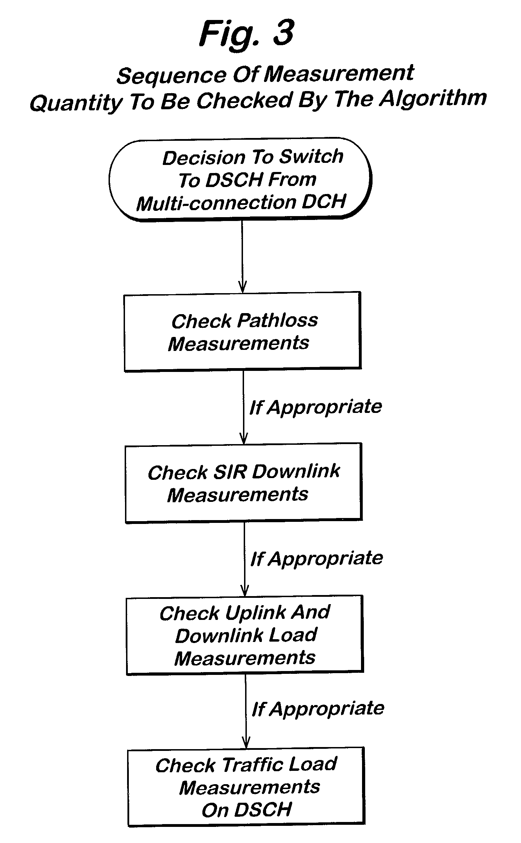

As shown in Figure 3, to make the selection of with which base station to be in downlink shared channel DSCH connection, as many of the following parameters as needed are considered in turn:
Signal Attenuation (path loss),
Downlink signal-to-interference ratio,
Total uplink and downlink power (loading),
Traffic Load on the downlink shared channel DSCH.

### Signal Attenuation (Path Loss)

Attenuation (path loss) of a signal from a base station is measured by the mobile user terminal and the measured value is reported back to the base station. If there are two or more connections in the dedicated mode (i.e. over dedicated channels, then the base station with the minimum signal attenuation may be selected.

### Downlink signal-to-interference ratio

Signal to interference ratio from a base station to the mobile user terminal (i.e in the downlink direction) is determined by the mobile user terminal and reported back to the base station. Downlink signal-to-interference ratio on the existing connections may be used in selecting which base station will have the shared channel connection to the mobile user terminal (i.e. be in the serving cell). The better the signal-to-interference ratio the lower the error rate will be . Measurements of signal-to-interference ratio over the various dedicated channels are compared.

### Uplink & downlink loading

This parameter takes into account the total power loading (both downlink and uplink) of each base station, and like the other parameters can be used to choose the base station for the downlink shared channel DSCH connection. The decision can then be made taking into account power requirements on the downlink shared channel DSCH for a particular mobile user terminal. If the base station has enough power to support the mobile user terminal in the downlink, that cell can be selected to maintain its connection but now on a downlink shared channel DSCH channel.

### Existing traffic load

It may also be beneficial to consider the existing traffic load on the downlink shared channel DSCH of each of the base stations.. This is because each base station cell would have a number of mobile user terminals already using its downlink shared channel DSCH. The base station cell with the lowest traffic load on its downlink shared channel DSCH would be more desirable to chose, as this help in reducing congestion on the shared channel.

### Illustration of the Method

The method can be explained by the following example.

If the mobile user terminal is in, say, 4-way softhand-off (i.e there are 4 dedicated connections) with different cells and the decision has been made by a Radio Network Controller to switch the user connection from 4 dedicated channels to a shared channel with a single connection. Then the mobile user terminal would follow the following high level steps in executing the proposed algorithm:
Step 1: Pick the first measurement quantity and sort (best to worst) measurements from each cell.
Step 2: For the chosen measurement quantity, check which cells have measured quantity values which considered to be in a window (i.e range of values from the best considered acceptable). Base stations having measurements falling outside this window are rejected as candidates.
Step 3: If more than one measurement remains within the window, then go to the next measurement quantity as shown in Figure 2.
Step 4: If measurement of the next quantity is enabled, repeat steps 1, 2, 3, 4, else go out of the loop(i.e select the best from the last measured quantity .

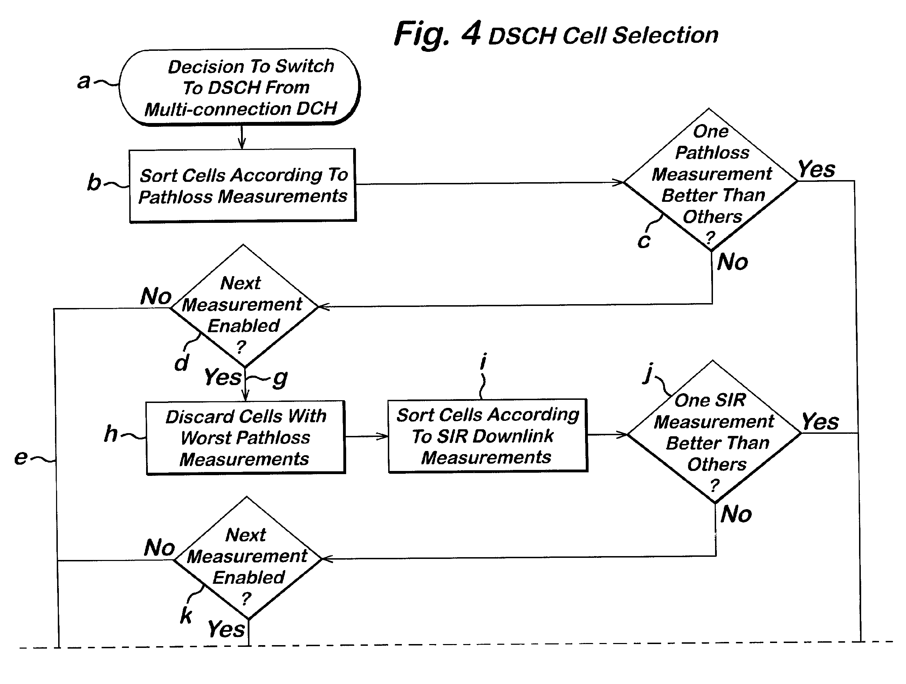

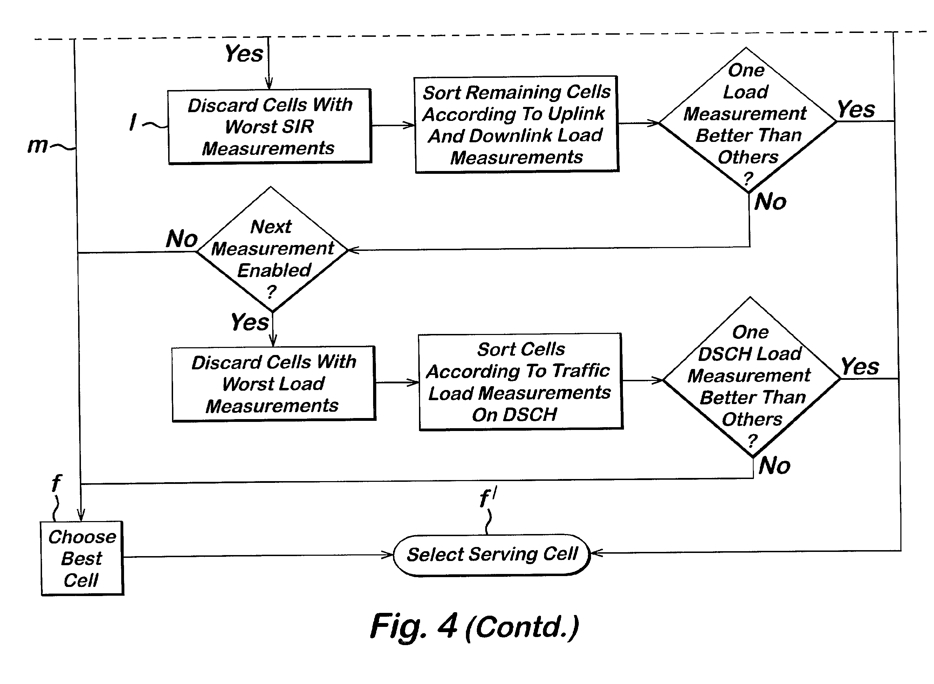

### Referring to Figure 4, a more detailed example is as follows:

A decision is made (a) to switch to downlink shared channel DSCH from the multiple dedicated channels DCH. Attenuation (path loss) is selected (b) as the parameter to be considered and measurements give, say 110 dB for Cell1 , 105 dB for Cell2 , 130 dB for Cell3, 112 dB for Cell4. These are sorted from best to worst as Cell 2(105 dB), Cell 1(110 dB), Cell 4(112 dB), Cell3 (130 dB). (Step 1 for signal attenuation is now complete.). For signal attenuation a window (i.e range) of 8db from the best signal attenuation is selected and applied (c) to determine whether one cell is selectable as the serving cell in being clearly better than the others, i.e in being the only cell having a signal attenuation falling within the window.

In the example applying the window size of 8dB, gives more than one cell, namely Cell 2(105) dB, Cell 1(110 dB), and Cell 4(112 dB) as acceptable. Accordingly (d) downlink signal to interference ratio is selected as the next parameter to be measured (step 3). If the measurement of this parameter is (e) disabled, the loop is exited and the best cell is (f, f') selected from the measurements currently available (i.e.signal attenuation)(step 4), in the example this is Cell2.

On the other hand if the measurement of this parameter is (g) enabled, measurements of signal to interference ratio are made on the three cells Cell2, Cell 1 and Cell4 with (h) only Cell3 being discarded (i.e no longer being considered) because its value is below i.e outside the signal attenuation window. (Step 2 as regards signal attenuation is now complete.) The SIR measurements could be say 5 dB for Cell 2, 6 dB for Cell 1 , and 7 dB for Cell3.The cells are then (i) sorted according to their downlink signal to interference ratio, giving say Cell 3(7 dB), Cell 1(6 dB), Cell 2 (5 dB). A determination is then made (j) as to whether one SIR measurement is clearly better than the others using a window size of 1dB, leaves Cell 3(7 dB), and Cell 1(6 dB). This raises the question (step 3, k) of whether measurement of the next parameter namely uplink and downlink loading is enabled. If yes, (l) Cell2 is discarded because its value is outside the window, leaving Cell 3 and Cell 1 for consideration (step 4). If the next measurement quantity (uplink and downlink loading) is disabled (m) the loop is exited and the best of the remaining cells is (f,f') selected based on which has the better/best last measured parameter, e.g. Cell 3 in this example as it has a higher SIR value than Cell 1.

As shown in Figures 3 and 4, if need be, traffic loading on the respective downlink shared channels DSCH of the various cells is considered if measurement of that parameter is enabled but the measurement of uplink and downlink power loading has not determined that one cell having uplink and downlink power loading sufficiently lower than the others. If that point is reached, the base station having a downlink shared channel DSCH which is of lowest data loading is selected to be in connection with the mobile user terminal.

## Claims

1. A method of selecting which base station of those in dedicated channel connection with a mobile user terminal is to be in shared channel connection with the mobile user terminal, measurements of signal attenuation between the mobile user terminal and each base station being made, the base station being selected dependent upon the measured signal attenuations.

2. A method according to claim 1, in which if one of the base stations has the lowest measured signal attenuation by a predetermined margin, that base station is selected.

3. A method according to claim 1 or claim 2, in which measurements of downlink signal to interference ratio between the mobile user terminal and each of the base stations are made, the base station being selected dependent upon the measured signal to interference ratios.

4. A method according to claim 3, in which if more than one base station has a measured signal attenuation which is acceptably low, if one of those base stations has the highest measured signal to interference ratio by a predetermined margin, that base station is selected.

5. A method according to any preceding claim, in which measurements of uplink and downlink power loading between the mobile user terminal and each of the base stations are made, the base station being selected dependent upon the combined uplink and downlink measured power loadings for each base station.

6. A method according to claim 5, in which if more than one base station has a measured signal attenuation which is acceptably low and a measured signal to interference ratio which is acceptably high, if one of those base stations is determined as having the lowest combined uplink and downlink power loading by a predetermined margin, that base station is selected.

7. A method according to any preceding claim, in which measurements of traffic loading on the shared channel of each of the base stations are made, the base station being selected dependent upon the measured traffic loadings.

8. A method according to claim 7, in which if more than one base station has a measured signal attenuation which is acceptably low, a measured signal to interference ratio which is acceptably high, and a combined uplink and downlink power loading which is acceptably low, of those base stations the base station having the lowest measured traffic loading is selected.

9. A,network for mobile telecommunications comprising a plurality of base stations connected to a base station controller, the controller being operative to select which base station of those in dedicated channel connection with a mobile user terminal is to be in shared channel connection with the mobile user terminal, the mobile user terminal being operative to measure signal attenuation from each base station. the measured signal attenuations being reported to the controller, the controller being operative to select the base station dependent upon the measured signal attenuations.

10. A network according to claim 9, in which the controller is operative to determine whether one of the base stations has the lowest measured signal attenuation by a predetermined margin, and if so, the controller is operative to select that base station.
